# FASCICULE DE BREVET EUROPEEN

(11) **EP 1 678 372 B1**
(45) Date de publication et mention de la délivrance du brevet: **08.07.2009**
(21) Numéro de dépôt: 04769679.4
(22) Date de dépôt: 18.10.2004
(51) Int. Cl.: D06M 23/08, C08J 5/04, B29B 15/10

(54) **PROCEDE ET DISPOSITIF D'IMPREGNATION D'UN RESEAU FIBREUX PAR DE LA POUDRE UTILISANT UN CHAMP ELECTROSTATIQUE ALTERNATIF**
VERFAHREN UND VORRICHTUNG ZUR IMPREGNIERUNG EINES FASERNETZWERKS MIT PULVER IN EINEM ELEKTROSTATISCHEN FELD MIT WECHSELSPANNUNG
PROCESS AND DEVICE FOR IMPREGANTING A FIBRE NETWORK WITH POWDER MATERIAL IN AN ELECTROSTATIC FIELD WITH ALTERNATING CURRENT

(30) Priorité: 21.10.2003 EP 03292607
(43) Date de publication de la demande: 12.07.2006
(73) Titulaire: Fibroline France, 69130 Ecully (FR)
(72) Inventeur: MARDUEL, Joric, F-69380 Chazay d'Azergues (FR)
(74) Mandataire: Moinas, Michel
(86) Numéro de dépôt international: PCT/IB2004/003427
(87) Numéro de publication internationale: WO 2005/038123

(56) Documents cités:
- EP-A- 0 179 688
- EP-A- 0 914 916
- EP-A- 1 525 969
- WO-A-02/30657
- US-A- 2 730 455
- US-A- 3 919 437
- US-A- 5 895 622

## Description

La présente invention se rapporte à un nouveau procédé d'imprégnation d'un réseau fibreux, filamenteux et/ou poreux par de la poudre, notamment pour produire un matériau composite comprenant une matrice continue, rigide ou flexible, avec laquelle ledit réseau est en contact intime.

Les matériaux composites renforcés par des fibres noyées dans des matrices thermoplastiques ou thermodurcissables sont une catégorie de matériaux extrêmement intéressante, permettant notamment de réaliser des matériaux présentant d'excellentes propriétés mécaniques pour des masses sensiblement inférieures à celles des métaux. En outre, ces matériaux sont obtenus par simple moulage, après avoir enrobé les fibres ou filaments de renfort de la résine destinée à constituer la matrice du matériau composite. Bien évidemment, les propriétés mécaniques du matériau composite ainsi obtenu sont fonction de la qualité de l'interface entre les fibres ou filaments de renfort et la matrice.

Ceci suppose donc une bonne cohésion entre les fibres ou les filaments et la matrice. Deux facteurs permettent essentiellement de déterminer cette cohésion, il s'agit d'une part des propriétés d'adhésion entre la résine et les fibres ou filaments de renfort, c'est-à-dire du choix de la matière destinée à former la matrice et, d'autre part, du taux de vide à l'intérieur du composite. Ce second facteur résulte évidemment de la capacité que la résine présente pour s'infiltrer entre les fibres ou les filaments de la masse fibreuse. En effet, chaque fibre ou filament ou chaque portion de fibre ou de filament qui ne se trouve pas enrobée dans la matrice ne participe pas ou ne participe que partiellement aux propriétés mécaniques du matériau composite. Par conséquent, le taux de vide réduit d'autant les propriétés mécaniques du matériau composite.

Les matériaux fibreux servant d'isolants acoustiques ou thermiques sont réalisés en collant ou thermocollant les fibres constituant le nontissé au point d'intersection entre les fibres. Ces matériaux peuvent être réalisés par passage du non tissé dans un bain de colle ou par utilisation de fibres ou de poudres thermocollantes. La difficulté dans le cas des poudres thermocollantes est d'utiliser un procédé qui permette de répartir les poudres aux points de croisement des fibres pour optimiser le collage tout en limitant la quantité de poudre utilisée.

Les matériaux textiles fonctionnels nécessitent d'introduire un principe actif (antibactérien, anti-feu, super-absorbant ...) dans le textile de base. Ce principe actif peut se présenter sous forme de bains liquides ou sous forme de poudres sèches qu'il faudra imprégner dans le support textile. Le cas des principes actifs sous forme liquide présentent l'inconvénient de nécessiter une consommation d'énergie importante pour pouvoir être séchés tout en évaporant le solvant du bain. Les poudres n'ont pas ce type de problème mais sont parfois difficiles à répartir dans le textile de base de manière homogène et définitive.

WO 99/22920 décrit un procédé d'imprégnation de poudre à l'intérieur d'un réseau fibreux ou filamenteux caractérisé en ce que l'on place la poudre, d'une part et ledit réseau de fibres ou de filaments, d'autre part, dans un champ électrique dont la tension alternative est d'au moins 5 kV pendant une durée d'au moins 2 s. Ce document décrit comme électrodes deux plaques métalliques superposées et parallèles connectées aux deux pôles respectifs d'un générateur électrique, dont les faces respectives disposées vis-à-vis l'une de l'autre sont recouvertes d'une plaque diélectrique, par exemple de vitrocéramique.

Ce procédé présente de nombreux avantages mais il est mal adapté au traitement d'objets à imprégner de grandes dimensions, par exemple de 0,80 à 7,00 m de large, en particulier lorsqu'on réalise le traitement en continu avec un matériau en défilement entre les électrodes- En effet, toute déformation géométrique des électrodes entraîne des écarts de distance entre celles-ci qui nuisent à l'homogénéité du champ électrique et donc à la qualité d'imprégnation des poudres. Pour éviter cette déformation géométrique, l'électrode plaque métallique inférieure peut être posée sur un bâtis; par contré l'électrode plaque métallique supérieure et le diélectrique qui la recouvre nécessitent donc d'être rigidifiés, par exemple par des barres transversales, ce qui peut nuire au fonctionnement des électrodes.

La présente invention a pour but de proposer un procédé d'imprégnation de poudre à l'intérieur d'un réseau fibreux, filamenteux et/ou poreux, utilisant un champ électrique alternatif, qui soit adapté à l'imprégnation en continu d'objets de grandes dimensions, par exemple d'au moins 0,80 m, en particulier de 1,20-7,00 m, dans la direction perpendiculaire au défilement de l'objet à imprégner, sans présenter les inconvénients précités.

Ce but est atteint par l'invention telle que définie par le jeu ci-joint de revendications.

L'invention concerne un procédé d'imprégnation électrique de poudre à l'intérieur d'un réseau fibreux, filamenteux et/ou poreux par de la poudre, notamment pour produire un matériau composite, lié ou fonctionnel, comprenant une matrice continue, rigide ou flexible, avec laquelle ledit réseau est en contact intime, dans lequel on place la poudre d'une part, et ledit réseau d'autre part, entre une électrode inférieure et une électrode supérieure, on isole électriquement par un diélectrique ces électrodes l'une de l'autre et on les relie respectivement aux pôles d'un générateur alternatif, afin de soumettre simultanément la poudre et ledit réseau à un champ électrique, caractérisé en ce que l'électrode supérieure comprend au moins un tube électrodique et le champ électrique alternatif appliqué est de 0,10 à 20 kV/mm.

L'un des pôles du générateur alternatif est la phase, l'autre est le neutre, en général raccordé à la terre pour des raisons de sécurité, notamment lorsque le générateur alternatif est haute tension.

Le bon fonctionnement du procédé exige l'application sur le matériau à imprégner d'un champ électrique alternatif de 0,10 à 20 kV/mm. L'exigence d'obtenir un champ électrique élevé pour déplacer les particules de poudre nécessite en général l'utilisation d'un générateur haute tension alternative. Ce générateur peut être constitué d'un ou plusieurs transformateurs haute tension capable d'élever la tension délivrée par un variateur de tension primaire qui peut être lui-même constitué d'un autotransformateur. Ce variateur de tension primaire a pour fonction d'ajuster la tension qui va être élevée par le transformateur afin de constituer un générateur haute tension alternative à tension variable. Une solution consiste également à utiliser des dispositifs électroniques pour réaliser tout ou partie de ce générateur haute tension. La fréquence de ce générateur haute tension peut-être variable afin d'optimiser les performances d'imprégnation suivant la nature et la granulométrie de la poudre à imprégner. Cette fréquence pourra varier dans une plage de 1 Hertz à 1000 Hertz suivant les cas. La forme du signal électrique appliqué aux électrodes influence également l'imprégnation de la poudre. Des signaux carrés, sinusoïdaux ou triangles peuvent être employés ainsi que des signaux de formes plus complexes. En général on utilise une tension de signal sinusoïdale à 50 ou 60 Hertz afin d'utiliser un générateur haute tension économique.

Les électrodes sont constituées d'éléments fortement conducteurs pour garantir une tension équivalente en tout point de leur surface et minimiser les pertes par échauffement. Les métaux tels que par exemple le cuivre, l'aluminium, l'argent ou l'or sont avantageusement indiqués pour cela.

Un système d'isolants, encore appelé diélectrique, recouvre en général au moins une des électrodes afin de constituer une isolation électrique permettant de limiter le courant entre les électrodes et d'éviter l'apparition d'un arc électrique constituant un court-circuit lors de l'utilisation de champ électrique supérieur à la rigidité diélectrique de l'air. L'emploi de matériaux isolants est source de nombreux problèmes dans la conception ou la réalisation des matériels électriques. Une des principales causes de défaillance est, en effet, la rupture de l'isolation. En effet, lorsqu'un isolant est soumis à de fortes contraintes (électrique, thermique ou mécanique) il apparaît localement des zones non neutres en surface et/ou en volume qui modifient l'état électrique du matériau et induisent une distribution interne de champ résiduel. L'accumulation des charges d'espaces peut-être à L'origine de la dégradation du matériau et conduire au claquage de l'isolant.

Les isolants utilisés dans le procédé doivent présenter une rigidité diélectrique élevée et une bonne tenue en terme de vieillissement. Les matériaux comme le quartz, le verre ou la céramique présentent des caractéristiques intéressantes pour constituer ce diélectrique. Ces matériaux ont la faculté d'accumuler une faible quantité de charges d'espace lorsqu'ils sont soumis à un champ électrique. Le quartz est particulièrement apprécié comme isolant diélectrique car il présente une haute rigidité diélectrique et a une bonne tenue au vieillissement.

L'épaisseur du diélectrique dépend du niveau de champ électrique appliqué sur les électrodes. Les épaisseurs de diélectrique de 1 mm à 20 mm conviennent, avec une préférence pour les épaisseurs comprises entre 2 et 5 mm.

Suivant les niveaux de champ appliqués sur le matériau, il est possible d'isoler un seul pôle d'électrode ou les deux. L'isolation maximum sera obtenue avec un isolant diélectrique sur les deux pôles d'électrodes. Pour des matériaux pouvant être imprégnés avec un champ électrique inférieur à la tension de claquage de l'air, il est possible d'utiliser directement l'air comme isolant entre les électrodes métalliques. La bande transporteuse peut également être choisie pour servir de diélectrique avec une marge de sécurité suffisante par rapport au risque d'arc électrique.

L'utilisation de résines fortement chargées de particules métalliques (laque d'argent par exemple) permet de réaliser directement un revêtement servant d'électrode à la surface de l'isolant diélectrique. De même l'utilisation de films métalliques recouverts d'adhésif permet d'appliquer directement l'électrode sur l'isolant diélectrique sans avoir de lame d'air entre l'électrode et le diélectrique. Une autre solution particulièrement intéressant consiste à métalliser directement l'isolant diélectrique à l'aide d'une des différentes techniques de métallisation bien connues dans l'art (métallisation sous vide PVD, ou CVD, métallisation chimique etc....). Là encore l'absence de lame d'air entre l'électrode et l'isolant diélectrique est favorable pour éviter des micro-décharges électriques entre les deux éléments.

Selon l'invention, l'électrode supérieure comprend au moins un tube électrodique. La déformation au centre de cette électrode est ainsi fortement réduite ce qui permet de réaliser des traitements sur de grandes largeurs d'au moins 0,80 m, en particulier de 1,20-7,00 m. La disposition classique des électrodes est perpendiculaire au sens de défilement du produit à traiter. D'autres configurations peuvent être utilisées avec des électrodes orientées de 0 à 90° par rapport à cette disposition classique. L'intérêt de cette disposition non perpendiculaire du sens de défilement est d'utiliser des électrodes plus courtes que la largeur du substrat à traiter notamment lorsque ce dernier est de grande largeur.

Le ou les tubes électrodiques peuvent présenter une section circulaire, rectangulaire ou une autre forme permettant d'appliquer un champ uniforme. Cette section peut également prendre des formes plus complexes afin de concentrer les lignes de champ ponctuellement pour améliorer la capacité d'imprégnation du dispositif. Les tubes électrodiques sont en général constitués d'un diélectrique et d'une partie métallique.

Des tubes électrodiques particulièrement intéressants sont des tubes creux de diélectrique métallisés intérieurement, en particulier des tubes creux de quartz métallisés intérieurement. Des métaux tels que par exemple le cuivre, l'aluminium, l'argent ou l'or peuvent être utilisés pour cette métallisation.

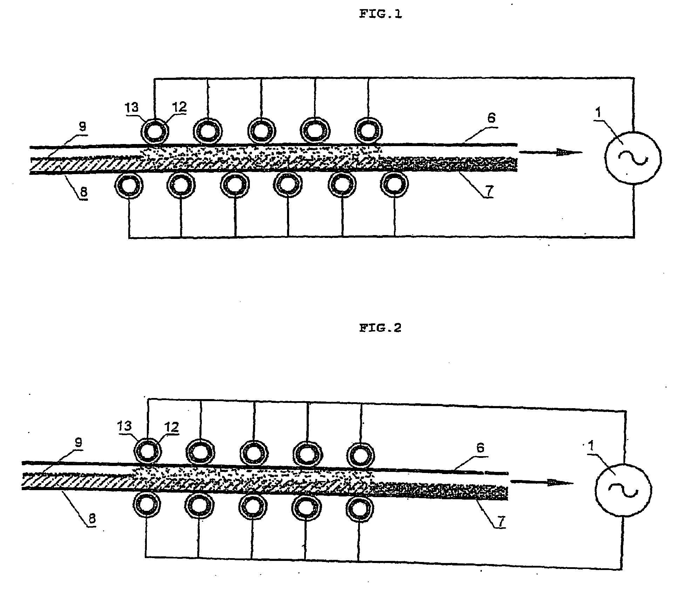

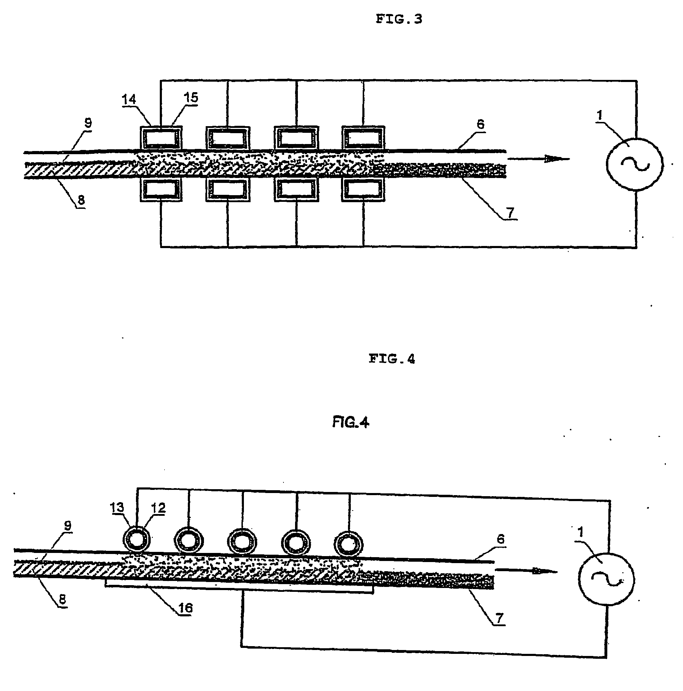

Différentes configurations peuvent être utilisées pour disposer ces tubes et appliquer un champ électrique sur le produit à imprégner (cf. Figures 1 à 4 décrites ci-dessous). Dans des configurations d'électrodes avantageuses :
- les électrodes inférieures et supérieures sont constituées de tubes creux circulaires de diélectrique métallisés avec une configuration décalée de ces tubes (Figure 1) ou avec une configuration en vis à vis de ces tubes (Figure 2)
- les électrodes inférieures et supérieures sont constituées de tubes creux rectangulaires de diélectrique métallisés avec une configuration en vis à vis de ces tubes (Figure 3)
- l'électrode inférieure est une plaque rectangulaire et l'électrode supérieure est constituée de tubes creux circulaires de diélectrique métallisés (Figure 4).

En fonction des matériaux, de la vitesse de défilement et du temps d'imprégnation recherché, un espacement plus ou moins important entre les tubes d'un même potentiel peut être retenu. Les vitesses d'imprégnation maximum sont obtenues avec un espacement très réduit entre les tubes d'un même potentiel.

L'obtention de l'effet d'imprégnation nécessite l'application du champ électrique alternatif pendant un temps suffisant. Celui-ci dépend notamment de la nature du réseau fibreux, filamenteux et/ou poreux et de la poudre, et des autres paramètres du procédé, en particulier l'intensité et la fréquence du champ alternatif, la forme des signaux, la configuration et les dimensions des électrodes. Ce temps suffisant sera facilement déterminé par l'homme du métier par des expériences de routine. En général il est d'au moins 1 s, souvent d'au moins 2 s, en particulier d'au moins 5 s.

### Saupoudrage préalable

Une étape préalable au procédé consiste à saupoudrer la poudre à imprégner sur le dessus du support fibreux, filamenteux ou poreux. Le matériau ainsi constitué du support recouvert de la poudre peut être introduit dans le procédé afin de faire pénétrer la poudre dans son support. Dans certains cas, et notamment lorsque le support est très épais ou peu poreux, il est possible de réaliser un saupoudrage à la fois sur le dessus du support et/ou sur le dessous en saupoudrant tout ou partie de la poudre sur le tapis inférieur qui permet d'introduire le matériau dans le procédé.

Le saupoudrage est généralement réalisé sur l'ensemble de la surface du support à imprégner. Dans certains cas, il est possible d'utiliser un saupoudrage localisé ou d'utiliser un pochoir pour imprégner uniquement certaines zones du support. Cet effet peut être recherché lorsque des pièces sont découpées dans l'utilisation finale du produit. Dans ce cas l'imprégnation localisée évite les pertes inutiles de poudre dans les chutes de matières qui peuvent ainsi être recyclées. Cet effet d'imprégnation localisé peut également être recherché pour obtenir des caractéristiques différentes suivants les zones du produit final (renfort ponctuel, traitement localisé...).

### Les bandes transporteuses

Le procédé peut être utilisé pour des imprégnations en défilement continu avec l'utilisation de deux bandes transporteuses réalisées en matériaux isolants comme du tissu de verre ou des polymères recouverts de polytétrafluoréthylène, de polyuréthane ou de silicone par exemple. L'utilisation de ces deux bandes transporteuses permet de prendre en sandwich le produit à imprégner en évitant la dispersion de la poudre et en évitant l'accumulation de la poudre à la surface des électrodes. L'utilisation de deux bandes transporteuses permet également de maintenir confinée la poudre sur le dessus du réseau fibreux lors de l'entrée du produit entre les électrodes. Dans le cas contraire, la poudre serait expulsée vers l'extérieur par le champ électrique.

Des dispositifs de nettoyage des bandes transporteuses en extrémité de machine permettent de récupérer la poudre qui pourrait rester présente à la surface des bandes. Ces systèmes de nettoyage peuvent utiliser des brosses et des systèmes d'aspiration. Dans tous les cas un collecteur permet de récupérer la poudre dans l'objectif de pouvoir la réintroduire en amont du procédé (saupoudrage du réseau fibreux, filamenteux et/ou poreux).

D'autres particularités et avantages de la présente invention apparaîtront dans la description qui va suivre, qui sera faite à l'aide des dessins annexés qui illustrent, schématiquement et à titre d'exemple, la mise en oeuvre du procédé de l'invention à l'aide de quatre configurations d'électrodes.

La Figure 1 représente un dispositif dans lequel les électrodes inférieures et supérieures sont constituées de tubes creux circulaires de quartz 13 métallisés 12 avec une configuration décalée (en quinconce) de ces tubes.

La Figure 2 représente un dispositif dans lequel les électrodes inférieures et supérieures sont constituées de tubes creux circulaires de quartz 13 métallisés 12 avec une configuration en vis à vis de ces tubes.

La Figure 3 représente un dispositif dans lequel les électrodes inférieures et supérieures sont constituées de tubes creux rectangulaires de quartz 14 métallisés 15 avec une configuration en vis à vis de ces tubes.

La Figure 4 représente un dispositif dans lequel l'électrode inférieure est une plaque rectangulaire 16 non recouverte de diélectrique (posée sur un bâtis non représenté) et l'électrode supérieure est constituée de tubes creux circulaires de quartz 12 métallisés 13.

Dans le dispositif de chacune des figures, de la poudre 9 est saupoudrée préalablement à la surface du matériau fibreux, filamenteux et/ou poreux 8, puis introduit en continu dans le procédé d'imprégnation par l'intermédiaire de deux bandes transporteuses 6 et 7. Le générateur haute tension 1 est raccordé aux électrodes supérieure et inférieure. La poudre est soumise à l'action du champ électrique alternatif qui la fait imprégner le réseau fibreux, filamenteux et/ou poreux, c'est-à-dire pénétrer dans l'espace disponible de celui-ci. A la sortie de l'applicateur, le matériau imprégné est utilisable pour son application finale (moulage de composite, thermofixation de matériaux d'isolation etc.).

Le dispositif de la Figure 1 permet d'obtenir un champ électrique relativement homogène sur le produit à imprégner.
Le dispositif de la Figure 2 permet d'obtenir un champ électrique avec des maxima entre les tubes électrodiques en vis-à-vis et des minima au milieu de l'espace séparant les tubes électrodiques. L'avancement du produit entre les bandes transporteuses entraîne l'application à celui-ci d'un champ électrique alternatif d'amplitude maximale variable à minima et maxima. Ceci peut présenter un intérêt particulier pour certains matériaux.

Le dispositif de la Figure 3 permet d'obtenir un champ électrique particulièrement homogène sur le produit à imprégner, proche de celui observé avec des électrodes plates, d'autant plus homogène que l'écart entre les tubes rectangulaires électrodiques est faible.

Le dispositif de la Figure 4 permet aussi d'obtenir un champ électrique avec des maxima et des minima.
Le procédé de l'invention peut être utilisé pour imprégner divers substrats, réseaux fibreux, filamenteux et/ou poreux, avec des poudres de différentes natures et de différentes caractéristiques chimiques, fonctionnelles, et géométriques.

### La poudre

Différents types de poudre peuvent être utilisés dans le procédé de l'invention. Les natures de ces poudres varient suivant les applications finales recherchées. Les poudres de nature isolante sont les plus simples à utiliser bien qu'il ait été démontré qu'une poudre conductrice pouvait également se charger électriquement et ainsi être imprégnée dans un réseau fibreux par l'action du champ électrique alternatif. D'une manière générale, les poudres à base de polymères organiques ainsi que les poudres minérales fonctionnent bien et sont souvent utilisées dans le procédé. La granulométrie est le paramètre prépondérant dans le choix d'une poudre. Les essais réalisés ont permis d'imprégner des poudres dont la granulométrie varie de 0,1 à 500 µm. Dans tous les cas, la taille des particules de poudre devra être compatible avec la porosité du réseau fibreux ou poreux pour obtenir une imprégnation du réseau.

Il est également possible d'utiliser des mélanges de plusieurs poudres imprégnées en même temps dont la nature chimique ou les caractéristiques géométriques sont complémentaires pour l'usage final du matériau.

### Les substrats à imprégner

Les réseaux fibreux, filamenteux et/ou poreux peuvent être des non-tissés, des tissus, des tricots, des papiers, du cuir, des fibres de bois, des fibres minérales, notamment des non-tissés en fibres céramiques, de verre ou de basalt, des mousses, notamment des mousses ouvertes, par exemple des mousses en polymères composites ou non (polystyrène, polymères styréniques, PVC, polyuréthannes, polymères phénoliques, silicones, polyoléfines, autres polymères thermoplastiques et thermodurcissables, caoutchoucs et polymères thermoplastiques élastomères, etc...), et des mousses minérales, ou toutes structures présentant une porosité suffisante pour permettre la diffusion de poudres par l'action des forces électrostatiques alternatives.

### Matériaux fonctionnels

Ce procédé peut être utilisé pour imprégner des poudres fonctionnelles comme des savons, des super-absorbants, des poudres anti-feux qui permettront d'utiliser le substrat ainsi imprégné comme produit fonctionnel dans différentes applications finales (hygiène, cosmétiques, transports, bâtiment etc..). Dans ces différents cas, la quantité de poudre à imprégner pourra être variable de 0,2% à 100% de la masse de substrat suivant les effets recherchés. Dans certains cas, une technique de fixation postérieure des poudres imprégnées pourra être requise pour permettre au produit réalisé de conserver ses caractéristiques finales.

### Matériaux liés (consolidés)

Ce procédé peut également être utilisé pour imprégner des poudres liantes ou collantes dans le réseau fibreux ou poreux. Dans ce cas, la poudre sera répartie dans le substrat afin de permettre une fixation du réseau dans la géométrie recherchée. Pour cela, une étape postérieure de thermofixation peut être requise pour permettre à la poudre d'adhérer sur le réseau et de conserver la structure dans la configuration recherchée. La quantité de poudre liante ou collante utilisée dans ce type d'application pourra varier de 0,5% à 30% de la masse du substrat suivant les caractéristiques recherchées. La nature des poudres utilisées pour ces applications peut être de la famille des polyuréthanes, des co-polyesters, des co-polyamides, ainsi que des différents thermoplastiques et thermodurcissables présentant des caractéristiques d'adhésion ou de collage.

### Matériaux composites à renfort fibreux

Ce procédé peut également être utilisé pour réaliser des matériaux renforcés constituant une matrice continue, rigide ou flexible en contact avec le réseau fibreux ou poreux. Dans ce cas, la poudre constitue la matrice qui va permettre d'apporter aux réseaux fibreux des propriétés mécaniques très élevés permettant d'utiliser les produits imprégnés obtenus comme matériaux composites. Les poudres utilisées peuvent avoir des caractéristiques thermoplastiques comme le polypropylène, le polyéthylène par exemple ou des caractéristiques thermodurcissables comme les poudres phénoliques ou époxydes par exemple. Les quantités de poudres requises pour réaliser ces matériaux imprégnés varient de 5% à 200% de la masse initiale de substrat. Ces matériaux imprégnés nécessitent une étape postérieure de mise en forme qui peut être réalisée, par exemple, par pressage à chaud.

Nous allons maintenant examiner quelques exemples de matériaux réalisés à l'aide de différents substrats tissés et nontissés et différentes poudres thermoplastiques, thermodurcissables et fonctionnelles à l'aide du procédé de l'invention mis en oeuvre avec des dispositifs comportant différentes configurations d'électrodes.

### Exemple 1:

Cet exemple est réalisé avec un nontissé de fibres naturelles en chanvre de 1000g/m² et de 9 mm d'épaisseur et avec de la poudre thermodurcissable de marque Bakélite référence 6171TP de granulométrie inférieure à 100 µm. Un saupoudrage préliminaire de 500g/m² de poudre est réalisé sur le face supérieure du nontissé.

L'ensemble est ensuite introduit dans le procédé d'imprégnation entre deux tapis à la vitesse de 2 mètres par minute. Les électrodes utilisées sont des électrodes tubulaires de 30mm de diamètre extérieur qui sont disposées en vis à vis. L'espace séparant les électrodes supérieures et inférieures est de 10 mm entre diélectriques. L'espace entre deux électrodes tubulaires de même potentiel est de 15 mm soit 23 électrodes de chaque coté pour une longueur de traitement de 1 mètre. Un champ de 3 kV/mm est appliqué dans l'espace entre les tapis où se trouve le matériau à imprégner. Un temps de séjour de 30 secondes dans la machine permet d'obtenir une imprégnation homogène de la poudre dans le nontissé.

Après imprégnation, le matériau obtenu est pressé à chaud à 190°C pendant 1 minute avec une pression de 5 bars afin d'obtenir un matériau composite. Ce matériau de 2 mm d'épaisseur après pressage présente un module d'élasticité en flexion moyen de 4 000 MPa.

### Exemple 2:

Cet exemple est réalisé avec un nontissé spunlace viscose/polyester de 100g/m². Une poudre super-absorbante de référence JB 882 de la société SNF qui a une granulométrie inférieure à 100 µm est saupoudrée préalablement à la surface du nontissé.

La vitesse des tapis permettant d'introduire la matière dans la machine d'imprégnation est de 4 m/min.. Le temps d'imprégnation est donc de 15 secondes pour obtenir une imprégnation du super-absorbant dans le nontissé. Les électrodes utilisées sont des électrodes tubulaires de 30 mm de diamètre extérieur pour l'électrode supérieur et une électrode plate recouverte d'un diélectrique de 4 mm pour l'électrode inférieure. L'espace séparant les électrodes supérieures et inférieures est de 5 mm entre diélectriques. L'espace entre deux électrodes tubulaires supérieures est de 15 mm soit 23 électrodes. L'électrode plate inférieure a une dimension de 1m x 1m. Le champ électrique appliqué sur le produit est de 4 kV/mm.

On constate que la poudre imprégnée se positionne entre les fibres ce qui permet de manipuler le matériau imprégné sans observer de perte significative de poudre.

La capacité finale du produit obtenu permet d'absorber une quantité supérieure à 1500g/m² d'une solution saline à 0,9g g/l de NaCl après une immersion de 25 minutes dans cette dernière.

### Exemple 3:

L'objectif de cet exemple est de réaliser une thermofixation d'un nontissé en polyester après cardage afin de lui apporter une résistance mécanique suffisante pour être manipulé et transporté. Le nontissé est un polyester de 400g/m² qui a été cardé et nappé sur une épaisseur de 50 mm. La poudre thermoliante utilisée est une poudre en copolyamide de granulométrie 80-200 µm de la société Abifor.

Après la phase de saupoudrage à la surface du nontissé, le matériau est comprimé à 30 mm entre les tapis afin d'être introduit dans la machine d'imprégnation. Les électrodes utilisées sont des électrodes tubulaires de 30mm de diamètre extérieur qui sont disposées en quinconce. L'espace entre deux électrodes tubulaires de même potentiel est de 15 mm soit 23 électrodes de chaque côté pour une longueur de traitement de 1 mètre. Une vitesse de 2 m/min est utilisée soit un temps d'imprégnation de 30 secondes ce qui permet de disperser l'ensemble de la poudre thermoliante dans le volume du nontissé.

Le champ électrique appliqué sur le matériau est de 2 kV/mm.

Une étape postérieure de thermofixation est réalisée dans un four à une température de 140°C pendant 3 minutes afin d'obtenir un matériau présentant une bonne solidité mécanique et une bonne résilience afin d'être utilisé comme isolant thermique.

### Exemple 4 :

Un matériau servant d'isolant acoustique est réalisé en imprégnant un nontissé à base de fibres de coton recyclées avec des poudres de résines thermodurcissables phénoliques. Le nontissé est issu de fibres de coton recyclées qui ont été nappées afin d'obtenir un poids spécifique de 500g/m². La poudre phénolique, avec la référence 6993TP de la société Bakélite, est saupoudrée à la surface du nontissé avant introduction dans la machine d'imprégnation. Les électrodes utilisées sont des électrodes tubulaires de 30mm de diamètre extérieur qui sont disposées en vis à vis. L'espace séparant les électrodes supérieures et inférieures est de 15 mm entre diélectriques. L'espace entre deux électrodes tubulaires de même potentiel est de 15 mm soit 23 électrodes de chaque coté pour une longueur de traitement de 1 mètre. Un champ de 2,5 kV/mm est appliqué dans l'espace entre les tapis ou se trouve le matériau à imprégner. Un temps de traitement de 30 secondes dans la machine permet d'obtenir une imprégnation homogène de la poudre dans le nontissé.

Après imprégnation, le matériau obtenu est pressé à chaud à 180°C pendant 2 minutes avec un espace de 10 mm afin d'obtenir un matériau présentant de bonnes caractéristiques acoustiques.

### Exemple 5:

Cet exemple est réalisé en imprégnant un tricot en coton de 500g/m² avec une poudre époxy/polyester référence 2000/09 de la société Dakota-Coating. Une quantité de 100g/m² de cette poudre est préalablement saupoudrée sur le tricot avant d'introduire l'ensemble dans la machine d'imprégnation. Les électrodes utilisées sont des électrodes tubulaires de 30 mm de diamètre extérieur pour l'électrode supérieur et une électrode plate recouverte d'un diélectrique de 4 mm pour l'électrode inférieure. L'espace séparant les électrodes supérieures et inférieures est de 5 mm entre diélectriques. L'espace entre deux électrodes tubulaires supérieures est de 15 mm soit 23 électrodes pour une longueur de traitement de 1 mètre. L'électrode plate inférieure a une dimension de 1m x 1m. Un champ électrique de 2,5 kV/mm est appliqué dans le produit à imprégner. Un temps de 15 secondes permet d'imprégner uniformément la poudre entre les fibres.

Une étape postérieure permet de thermoformer le tricot en le chauffant à 170°C dans un moule qui lui donnera sa forme définitive.

### Exemple 6 :

On prend une mousse ouverte de polymère polyuréthanne de porosité moyenne, de grammage 330 g/m², et d'épaisseur 11 mm. On saupoudre sur la face supérieure à hauteur de 40% en masse par rapport à la masse finale avec une poudre minérale de granulométrie inférieure à la porosité du support mousse ouverte. Les électrodes utilisées sont des électrodes tubulaires de 30mm de diamètre extérieur qui sont disposées en vis à vis avec un écart inter-électrodes de 15 mm. On procède ensuite à l'imprégnation suivant le procédé de l'invention, avec une distance entre électrodes de polarités différentes de 30 mm et une tension alternative de 30 kV, pendant un temps de traitement de 30 secondes.

On obtient après traitement un matériau mousse ouverte polyuréthanne imprégné de façon homogène par de la poudre minérale.

### Exemple 7 :

On prend un papier pour application médicale, de porosité 57 c, de grammage 40 g/m². On dépose uniformément sur la face supérieure de ce support 10% en masse par rapport à la masse finale d'une poudre expansive (Expancel 461 DU 20, Akzo Nobel) de granulométrie 6 à 9 µm. Les électrodes utilisées sont des électrodes tubulaires de 30mm de diamètre extérieur qui sont disposées en vis à vis avec un écart inter-électrodes de 15 mm.

Puis on procède à l'application via le procédé de l'invention d'un traitement électrique avec une distance entre électrodes de polarités différentes de 4 mm et une tension alternative de 25 kV pendant 30 secondes.

On obtient un matériau dans lequel la poudre expansive est répartie uniformément dans le volume du papier. On applique alors un traitement thermique (200°C), qui provoque l'expansion effective des particules de poudre (jusqu'à 50 µm), et leur thermofixation dans la structure du papier.

### Exemple 8 :

On prend un non-tissé aiguilleté en fibres céramique (silicate d'alumine), résistant aux hautes températures, avec un grammage de 1700 g/m² et une épaisseur de 30 mm.

On dépose uniformément sur la face supérieure et inférieure une poudre thermoliante polyéthylène haute densité PEHD (Dakota Coatings HDPE T1 0-80 µm) à hauteur de 20% en masse par rapport à la masse finale. Les électrodes utilisées sont des électrodes tubulaires de 30mm de diamètre extérieur qui sont disposées en vis à vis avec un écart inter-électrodes de 15 mm.

Puis on procède à l'imprégnation selon le procédé de l'invention avec une distance entre électrodes de polarités différentes de 30 mm, une tension alternative de 50 kV et pendant 45 secondes.

Puis on applique un traitement thermique pour fondre les grains de PEHD répartis de façon homogène dans le volume du non-tissé (Température four : 170°C). On obtient un matériau en fibres céramiques thermolié.

## Revendications

1. Procédé d'imprégnation électrique de poudre à l'intérieur d'un réseau fibreux, filamenteux et/ou poreux par de la poudre, notamment pour produire un matériau composite, lié ou fonctionnel, comprenant une matrice continue, rigide ou flexible, avec laquelle ledit réseau est en contact intime, dans lequel on place la poudre d'une part, et ledit réseau d'autre part, entre une électrode inférieure et une électrode supérieure, on isole électriquement par un diélectrique ces électrodes l'une de l'autre et on les relie respectivement aux pôles d'un générateur alternatif, afin de soumettre simultanément la poudre et ledit réseau à un champ électrique, **caractérisé en ce que** l'électrode supérieure comprend au moins un tube électrodique et le champ électrique alternatif appliqué est de 0,10 à 20 kV/mm.

2. Procédé selon la revendication 1, **caractérisé en ce que** le ou les tubes électrodiques sont des tubes creux de diélectrique métallisés intérieurement.

3. Procédé selon l'une des revendications précédentes, **caractérisé en ce que** le diélectrique est choisi parmi le quartz, le verre et la céramique, en particulier de quartz.

4. Procédé selon l'une des revendications précédentes, **caractérisé en ce que** le ou les tubes électrodiques sont des tubes creux de quartz métallisés intérieurement.

5. Procédé selon l'une des revendications précédentes, **caractérisé en ce que** les tubes électrodiques ont une section circulaire.

6. Procédé selon l'une des revendications précédentes, **caractérisé en ce que** les tubes électrodiques ont une section rectangulaire.

7. Procédé selon l'une des revendications 1 à 5, **caractérisé en ce que** les électrodes inférieures et supérieures sont constituées de tubes creux circulaires de diélectrique (13) métallisés (12) avec une configuration décalée de ces tubes.

8. Procédé selon l'une des revendications 1 à 5, **caractérisé en ce que** les électrodes inférieures et supérieures sont constituées de tubes creux circulaires de diélectrique (13) métallisés (12) avec une configuration en vis à vis de ces tubes.

9. Procédé selon l'une des revendications 1 à 4 et 6, **caractérisé en ce que** les électrodes inférieures et supérieures sont constituées de tubes creux rectangulaires de diélectrique (14) métallisés (15) avec une configuration en vis à vis de ces tubes.

10. Procédé selon l'une des revendications 1 à 5, **caractérisé en ce que** l'électrode inférieure est une plaque rectangulaire (16) et l'électrode supérieure est constitué de tubes creux circulaires de diélectrique (13) métallisés (12).

## Claims

1. An electric powder impregnation process for impregnating powder into a fibrous, filamentary and/or porous network, especially in order to produce a bonded or functional composite, comprising a continuous, rigid or flexible, matrix with which said network is in intimate contact, in which process the powder on the one hand and said network on the other are placed between a lower electrode and an upper electrode, these electrodes are electrically insulated from each other by a dielectric and connected to the respective poles of an AC generator so as to simultaneously subject the powder and said network to an electric field, **characterized in that** the upper electrode comprises at least one electrode tube and the AC electric field applied is from 0.10 to 20 kV/mm.

2. The process as claimed in claim 1, **characterized in that** the electrode tube or tubes are internally metallized hollow dielectric tubes.

3. The process as claimed in either of the preceding claims, **characterized in that** the dielectric is selected from quartz, glass and ceramic, and in particular quartz.

4. The process as claimed in one of the preceding claims, **characterized in that** the electrode tube or tubes are internally metallized hollow quartz tubes.

5. The process as claimed in one of the preceding claims, **characterized in that** the electrode tubes have a circular cross section.

6. The process as claimed in one of the preceding claims, **characterized in that** the electrode tubes have a rectangular cross section.

7. The process as claimed in one of claims 1 to 5, **characterized in that** the upper and lower electrodes consist of metallized (12) hollow circular dielectric (13) tubes in an offset configuration of these tubes.

8. The process as claimed in one of claims 1 to 5, **characterized in that** the upper and lower electrodes consist of metallized (12) hollow circular dielectric (13) tubes in a configuration in which these tubes face one another.

9. The process as claimed in one of claims 1 to 4 and 6, **characterized in that** the upper and lower electrodes consist of metallized (15) hollow rectangular dielectric (14) tubes in a configuration in which these tubes face one another.

10. The process as claimed in one of claims 1 to 5, **characterized in that** the lower electrode is a rectangular plate (16) and the upper electrode consists of metallized (12) hollow circular dielectric (13) tubes.

## Patentansprüche

1. Verfahren zum elektrischen Imprägnieren auf Pulverbasis im Inneren eines faserartigen, fadenartigen und/oder porösen Netzwerkes mit Pulver, insbesondere zum Herstellen eines direkt oder funktionell miteinander verbundenen Verbundmaterials, mit einer steifen oder flexiblen durchgehenden Matrize, mit der das Netzwerk in einem innigen Kontakt ist, bei dem zum einen das Pulver und zum anderen das Netzwerk zwischen einer unteren Elektrode und einer oberen Elektrode angeordnet werden, die Elektroden elektrisch durch ein Dielektrikum voneinander isoliert werden und die beiden Pole jeweils mit einem Wechselgenerator verbunden werden, um gleichzeitig das Pulver und das Netzwerk einem elektrischen Feld auszusetzen, **dadurch gekennzeichnet, dass** die obere Elektrode wenigstens ein elektrodenartiges Rohr aufweist und das verwendete elektrische Wechselfeld zwischen 0,10 und 20 kV/mm liegt.

2. Verfahren nach Anspruch 1, **dadurch gekennzeichnet, dass** das oder jedes elektrodenartige Rohr ein hohles, dielektrisches, innenseitig metallisiertes Rohr ist.

3. Verfahren nach einem der vorangehenden Ansprüche, **dadurch gekennzeichnet, dass** das Dielektrikum aus Quarz, Glas und Keramik, insbesondere Quarz, ausgewählt wird.

4. Verfahren nach einem der vorangehenden Ansprüche, **dadurch gekennzeichnet, dass** das oder jedes elektrodenartige Rohr ein hohles, dielektrisches, innenseitig metallisiertes Rohr aus Quarz ist.

5. Verfahren nach einem der vorangehenden Ansprüche, **dadurch gekennzeichnet, dass** die elektrodenartigen Rohre einen kreisförmigen Querschnitt aufweisen.

6. Verfahren nach einem der vorangehenden Ansprüche, **dadurch gekennzeichnet, dass** die elektrodenartigen Rohre einen rechteckigen Querschnitt aufweisen.

7. Verfahren nach einem der Ansprüche 1 bis 5, **dadurch gekennzeichnet, dass** die oder jede untere Elektrode und die oder jede obere Elektrode aus hohlen kreisförmigen, dielektrischen (13), in einer gegenüber den Rohren in einer versetzten Anordnung metallisierten (12) Rohre gebildet sind.

8. Verfahren nach einem der Ansprüche 1 bis 5, **dadurch gekennzeichnet, dass** die oder jede untere Elektrode oder die oder jede obere Elektrode aus hohlen kreisförmigen, dielektrischen (13), in einer den Rohren gegenüberliegenden Anordnung metallisierten (12) Rohre gebildet sind.

9. Verfahren nach einem der Ansprüche 1 bis 4 und 6, **dadurch gekennzeichnet, dass** die oder jede untere Elektrode und die oder jede obere Elektrode aus hohlen, rechteckigen, dielektrischen (14), in einer den Rohren gegenüberliegenden Anordnung metallisierten (15) Rohre gebildet sind.

10. Verfahren nach einem der Ansprüche 1 bis 5, **dadurch gekennzeichnet, dass** die untere Elektrode eine rechteckige Platte (16) und die obere Elektrode aus hohlen, kreisförmigen, dielektrischen (13), metallisierten (12) Rohren gebildet sind.
